Europäisches Patentamt

European Patent Office

Office européen des brevets

(11) Veröffentlichungsnummer: **0 281 853**

**A1**

## (12) EUROPÄISCHE PATENTANMELDUNG

(21) Anmeldenummer: 88102771.8

(22) Anmeldetag: 25.02.88

(51) Int. Cl.4: **A47B 67/00** , A47B 96/20

(30) Priorität: 05.03.87 DE 3706997

(43) Veröffentlichungstag der Anmeldung:
**14.09.88 Patentblatt 88/37**

(84) Benannte Vertragsstaaten:
**AT BE CH DE ES FR GB GR IT LI NL SE**

(71) Anmelder: **Baus, Heinz Georg**
**Wartbodenstrasse 35**
**CH-3626 Hünibach-Thun(CH)**

(72) Erfinder: **Baus, Heinz Georg**
**Wartbodenstrasse 35**
**CH-3626 Hünibach-Thun(CH)**

(74) Vertreter: **Klose, Hans, Dipl.-Phys. et al**
**Kurfürstenstrasse 32**
**D-6700 Ludwigshafen(DE)**

(54) Schrank, insbesondere Badezimmerschrank.

(57) Ein Schrank, insbesondere ein Badezimmerschrank, enthält ein Gehäuse (2), das aus wenigstens zwei Profilteilen (4 bis 11) besteht, die in einem Eckbereich unter einem Winkel kleiner 180 Grad miteinander verbunden sind. Es soll die Aufgabe gelöst werden, bei geringem Fertigungs und Montageaufwand weitgehend unter Verzicht von Eckverbindern den Schrank aufbauen zu können. Es wird vorgeschlagen, daß die Profilteile (4 bis 11) aus einer einzigen, zunächst geraden Profilschiene bestehen, in welche zur Erzeugung des jeweiligen Eckbereiches (14) von der Außenseite her ein Schnitt eingebracht worden ist. Im Bereich der Innenseite des Eckbereiches (14) ist ein durchgehender Steg (32) vorhanden, der die Profilteile (4 bis 11) miteinander verbindet, wobei in den beim Biegen erhaltenen Spalt (16) ein Klemmkörper (18) eingesetzt ist.

FIG.1

EP 0 281 853 A1

## Schrank, insbesondere Badezimmerschrank

Die Erfindung betrifft einen Schrank, insbesondere Badezimmerschrank, mit einem Gehäuse, enthaltend wenigstens zwei Profilteile, die in einem Eckbereich unter einem Winkel kleiner 180° miteinander verbunden und bevorzugt als stranggepreßte Hohlprofile aus Aluminium oder einer Aluminiumlegierung ausgebildet sind.

Ein derartiger Schrank ist aus dem DE-GM 83 23 941 bekannt, gemäß welchem das Gehäuse bzw. der Rahmen aus insgesamt vier stranggezogenen oder stranggepreßten Leichtmetallprofilen aufgebaut ist, welche in den vier Eckbereichen mittels Eckverbindern miteinander verbunden sind. Derartige Profilteile werden regelmäßig aus einem Aluminium-Hohlprofil hergestellt, welches praktisch in einem Endlosverfahren durch Strangziehen oder Strangpressen gefertigt und nachfolgend auf das gewünschte Maß geschnitten wird. Nachfolgend werden die derart abgeschnittenen Profilteile mittels Echverbindern in der erforderlichen Weise unter einem rechten Winkel wieder miteinander vebunden. Der insoweit erforderliche Fertigungs- und Montageaufwand ist nicht unerheblich. Besonders aufwendig wird die Fertigung und Montage eines derartigen Schrankes, wenn das Gehäuse nicht rechteckförmig mit insgesamt vier Eckbereichen ausgebildet wird, sondern zwecks Abrundung oder zur Erzielung eines besonderen Design beispielsweise ein Vielfaches von vier Ecken aufweist.

Aus der US-PS 33 15 834 ist ein Rahmen, beispielsweise einer Schublade, nachgewiesen. Dieser Rahmen ist aus einer Profilschiene mit im wesentlichen U-förmigem Querschnitt gebildet und enthält einen nach außen sichtbaren dekorativen Streifen. Zur Erzeugung der Rahmenecke werden von der Innenseite her dreieckförmige Schlitze in die Profilschiene sowie in den eingelegten Streifen eingebracht. Der Rahmen weist in den Eckbereichen auf der Innenseite jeweils einen durchgehenden Schlitz mit Schnittkanten auf und auf der Außenseite wird die Verbindung der zueinander abgewinkelten Rahmenteile nur durch relativ - schmale Stege erreicht, zwischen welchen der genannte dekorative Streifen liegt. Ein derartiger Rahmen weist eine relativ geringe Verwindungssteifigkeit auf. Es müssen zusätzliche Maßnahmen zur Verbesserung der Stabilität und Steifigkeit getroffen werden.

In der DE-OS 28 30 935 sind Bauelemente beschrieben, welche aus ebenen Platten hergestellt sind. Zur Erzeugung von Eckbereichen werden diese Platten vollständig durchschnitten, wobei zwecks Fixierung der Plattenteile an der Außenseite Klebebänder angebracht werden. Nachfolgend werden die getrennten Plattenteile gefaltet und in der gewünschten Winkellage mittels eines Klebers verbunden. Die Stabilität des derart gefertigten Bauelementes wird maßgeblich von der Festigkeit der Klebeverbindung bestimmt; nach dem Falten und Kleben werden die auch als Kantenschutz dienenden Klebebänder wieder entfernt.

Der Erfindung liegt daher die Aufgabe zugrunde, einen Schrank der genannten Art in der Weise weiterzubilden, daß mit gerin gem Fertigungs- und Montageaufwand zusätzliche Eckverbinder eingespart werden können und auch bei einer Vielzahl von Abwinkelungen zwischen den Profilteilen ein insgesamt kostengünstiger Aufbau ermöglicht wird. Der Schrank soll eine gute Stabilität und hohe Verwindungssteifigkeit aufweisen. Ein funktionsgerechter Aufbau soll mit geringem Materialaufwand und niedrigem Gewicht realisiert werden können. Der Innenraum des Schrankes soll auch bei einer Vielzahl von Ecken möglichst leicht gesäubert werden können und ferner den Anforderungen hinsichtlich der Hygiene problemlos gerecht werden. Dies gilt umsomehr als der Schrank bevorzugt in einem Bad-oder Duschraum zum Einsatz gelangen soll. Der konstruktive Aufwand soll bei Gehäusen bzw. Rahmen mit mehr als vier Ecken bei einem ansprechenden Design gering sein. Der Schrank soll vor allem als Spiegelschrank ausgebildet werden können, wobei gleichwohl auch regalartige Ausführungsformen, also ohne Schiebe-oder Drehspiegeltüren an der Frontseite, vorgesehen werden können.

Zur Lösung dieser Aufgabe wird vorgeschlagen, daß die Profilteile aus einer einzigen, zunächst geraden Profilschiene bestehen, in welche zur Erzeugung des jeweiligen Eckbereiches von der Außenseite her ein Schnitt, insbesondere durch Konterschneiden, eingebracht worden ist, daß an der Innenseite des Eckbereiches ein durchgehender, die Profilteile verbindender Steg vorhanden ist und daß in dem durch Biegen des Eckbereiches erhaltenen und nach außen sich öffnenden Spalt eine Leiste, insbesondere in Form eines Klemmkörpers, angeordnet ist.

Der erfindungsgemäße Schrank zeichnet sich durch eine einfache Konstruktion aus und erfordert einen geringen Fertigungs-und Montageaufwand. Besondere Eckverbinder mit Schrauben, Zapfen oder ähnliches sind nicht erforderlich, da die im geforderten Winkel zueinander angeordneten Profilteile aus einer einzigen Profilschiene bestehen. Die Profilteile werden nicht durch vollständiges Durchtrennen einer geraden Profilschiene erzeugt und nachfolgend mittels Eckverbindern wieder zusammengesetzt. Vielmehr wird im Eckbereich von der Außenseite her wenigstens ein Schnitt eingebracht, wobei erfindungsgemäß im Bereich der Innenseite des Schrankes ein die Profilteile noch verbindender Steg stehenbleibt. Nachfolgend wird die Profilschiene in der Weise gebogen, daß die einzelnen durch das Einbringen von Schnitten erzeugten Profilteile die gewünschte Winkelstellung zueinander einnehmen. Der erfindungsgemäße Schrank kann aus einer einzigen Profilschiene gefertigt sein, deren Enden zweckmäßigerweise in einem Eckbereich miteinander verbunden sind.

Der Schrank ist an seiner Innenseite des Gehäuses bzw. Rahmens vollständig geschlossen und es ist nur eine einzige Verbindungsstelle zwischen den Enden der gebogenen Profilschiene vorhanden. Die Enden der zu einem Rechteck oder vor allem zu einem Polygon geformten Profilschiene sind im Rahmen dieser Erfindung durch Verbindungsmittel oder einem Eckverbinder miteinander verbunden. Im Gegensatz zu vorbekannten Schränken ist jedoch nur in einem einzigen Eckbereich ein derartiger Eckverbinder notwendig. Da an der Innenseite des Schrankes bzw. dessen Rahmens, abgesehen von der Verbindungsstelle der beiden Profilteile am Ende der Profilschiene, die Innenfläche des Gehäuses geschlossen ist, ist eine einfache Reinigung und Säuberung möglich. Dies ist vor allem beim Einsatz als Badezimmerschrank von Bedeutung. In jedem Eckbereich erstreckt sich der als Leiste ausgebildete Klemmkörper über die gesamte Breite des Schrankes. Der im wesentlichen dreieckförmig ausgebildete Klemmkörper liegt mit seinen Keilflächen an den Stirnflächen der Außenwand unter Vorspannung an. Der unter Vorspannung eingesetzte Klemmkörper dient in zuverlässiger Weise zur Stabilisierung und Verbesserung der Verwindungssteifigkeit. Es sei festgehalten, daß durch Einbringen der Schnitte in den Eckbereichen die ansich bei einem Hohlprofil vorhandene Verwindungssteifigkeit wesentlich reduziert wird, da die geschlossene Kontur aufgebrochen und nur noch über den Steg die durchgehende Verbindung der Innenwand der Profilschiene vorhanden ist. Der unter Vorspannung in den keilförmigen Spalt von außen eingesetzte Klemmkörper überträgt bei einwirkenden äußeren Kräften zuverlässig Druckspannungen. Darüber hinaus wird infolge der Vorspannung gewährleistet, daß die Stirn flächen der Außenwand zuverlässig an den Keilflächen des Klemmkörpers anliegen, so daß in die Hohlräume weder Schmutz eindringen kann noch unzulässige Relativbewegungen der einzelnen Profilteile ermöglicht werden. Der Klemmkörper liegt erfindungsgemäß mit seiner Spitze auf den Innenwand, und zwar unter Vorspannung auf. Der Klemmkörper liegt damit entsprechend einer Dreipunkt-Auflagerung über die gesamte Breite des Schrankes einerseits über die Spitze und anderseits über die beiden

Keilflächen an der Profilschiene bzw. den Profilteilen an, wodurch eine zweckmäßige Kraftverteilung und Kraftumleitung bei Belastungen gewährleistet wird. Die gegenseitigen Anlageflächen, über welche die Verspannung erfolgt, sind entsprechend der Materialdicke der Außenwand sowie der Breite des Schrankes vergleichsweise groß, so daß unzulässige Flächenpressungen vermieden werden. Der Klemmkörper bzw. die Leiste besteht zweckmäßig aus einem Kunststoff, der einerseits eine hinreichende Festigkeit und Härte im Hinblick auf die Übertragung der Vorspannkräfte aufweist. Andererseits weist der Klemmkörper erfindungsgemäß eine derartige Federelastizität auf, daß der Klemmkörper auch im Hinblick auf Fertigungstoleranzen zuverlässig in den Keilspalt des jeweiligen Eckbereiches eingepreßt werden kann und nachfolgend die elastischen Vorspannkräfte wirksam sind.

Obgleich sich die Fertigung des Schrankes aus einer einzigen Profilschiene als besonders zweckmäßig erwiesen hat, können insbesondere in Abhängigkeit von der Gesamtgröße des Schrankes erfindungsgemäß auch mehr als eine Profilschiene vorgesehen sein, die jedoch wiederum die beschriebenen Schnitte und Leisten in einem Eckbereich aufweisen, in welchem die jeweilige Profilschiene einen durchgehenden Steg aufweist. Als besonders zweckmäßig hat sich ferner das Einbringen des Schnittes für den Eckbereich nach dem Konterschnittverfahren erwiesen, um die Ausbildung eines Grates im Schnittbereich zu vermeiden. Nach dem Konterschnittverfahren wird in drei Schritten, nämlich das Ausschneiden, Gegenschneiden sowie Durchshneiden mit jeweils gegenläufiger Arbeitsbewegung die Gratbildung vermieden, so daß eine Nachbearbeitung der Schnittflächen entfallen kann. Die Schnittflächen sind vor dem Biegen der Profilschiene im wesentlichen parallel zueinander und nach dem Biegen ist im Eckbereich ein etwa V-förmiger, über die gesamte Tiefe von der Vorder-bis zur Rückseite durchgehender Spalt des Schrankes vorhanden. Auch der keilförmige Klemmkörper erstreckt sich erfindungsgemäß über diese Tiefe, welche der Breite der Profilschiene entspricht.

Die Profilschiene ist erfindungsgemäß als ein Hohlprofil ausgebildet, und die Schnittiefe ist in der Weise vorgegeben, daß sie im wesentlichen um die Materialstärke der Innenwand kleiner ist als die Materialstärke der gesamten Profilschiene. Es kann erfindungsgemäß die Innenwand beim Einschneiden geringfügig eingeritzt werden, um eine exakte Biegezone für das Hohlprofil zu definieren; die Eindringtiefe eines derartigen Ritzes wird in Abhängigkeit von der Materialstärke der Innenwand vorgegeben. Die erfindungsgemäß zum Einsatz gelangende Profilschiene besteht insbesondere aus Aluminium oder einer Aluminiumlegierung und die Oberflächenbehandlung erfolgt im Rahmen dieser Erfindung zweckmäßig erst nach dem Einbringen des Schnittes bzw. des Konterschnittes für den Eckbereich und nach dem Biegen und dem Verbinden der Enden. In den Eckbereichen wird aufgrund dieser wesentlichen Maßnahme ein zuverlässiger Oberflächenschutz gewährleistet und eine Beschädigung einer Eloxalschicht oder Lackschicht beim Biegen wird zuverlässig vermieden.

Die Erfindung wird nachfolgend anhand der in der Zeichnung dargestellten Ausführungsbeispiele näher erläutert. Es zeigen:

Fig. 1 eine perspektivische Ansicht des Schrankes,

Fig. 2 vergrößert einen Schnitt entlang Schnittlinie II gemäß Fig. 1,

Fig. 3 die Profilschiene aus Fig. 2 vor dem Biegen.

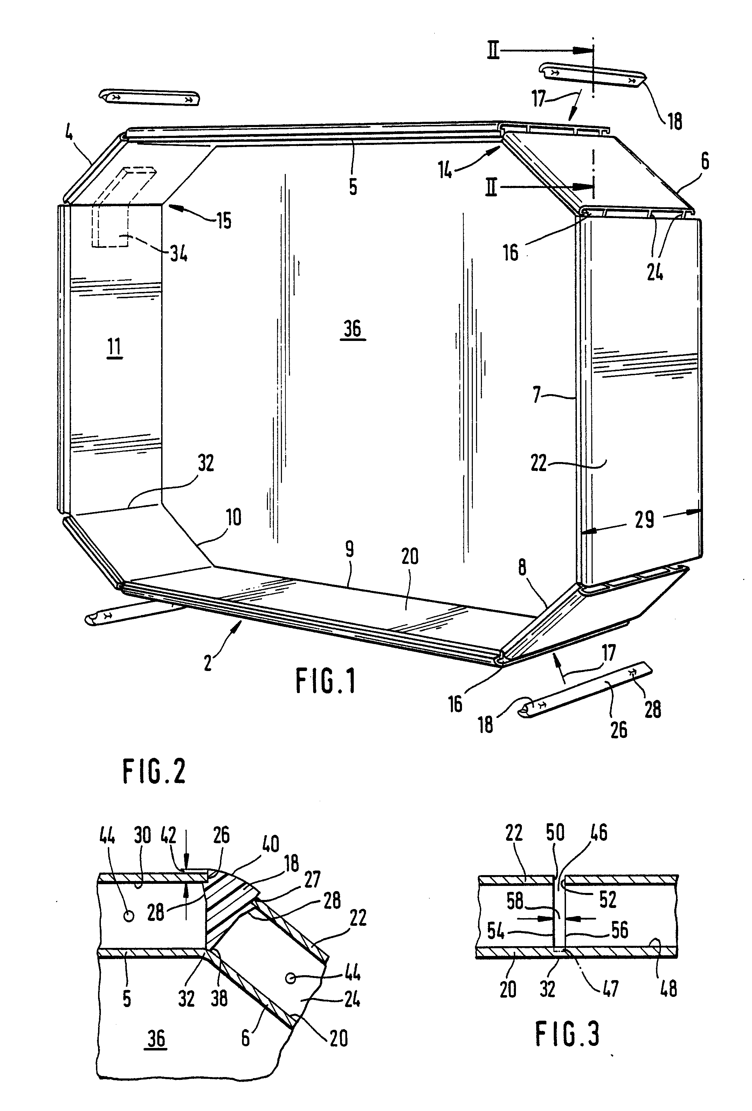

Fig. 1 zeigt einen Schrank, der als Badezimmerschrank zum Einsatz gelangt, wobei Zwischenböden oder an der Vorderseite ggfs. vorzusehende Spiegel-Schiebetüren oder Schwenktüren deer Einfachheit halber nicht dargestellt sind. Der Schrank weist ein Gehäuse 2 auf, das aus einer einzigen Profilschiene besteht und die Außenkontur eines Oktagon aufweist. Es sind insgesamt acht Profilteile 4 bis 11 vorhanden, welche in acht Eckbereichen 14 in Winkeln kleiner 180°, und zwar vom Innenraum aus betrachtet, zueinander angeordnet sind. In den Eckbereichen 14 ist jeweils ein sich nach außen öffnender Spalt 16 vorhanden, in welchen jeweils, wie mittels Pfeilen 17 angedeutet, ein keilförmiger Klemmkörper 18 einzusetzen ist. Aus Gründen der Übersichtlichkeit sind nur einige dieser insgesamt acht Klemmkörper 18 dargestellt. Die Profilschiene bzw. deren Profilteile 4 bis 11 sind als ein Hohlprofil mit einer Innenwand 20 und einer Außenwand 22 ausgebildet, welche mittels Zwischenwänden 24 miteinander verbunden sind. Die Klemmkörper 18 weisen an den Keilflächen 26 Rastelemente 28 auf, welche nach dem Einsetzen in den jeweiligen Spalt 16 die Innenfläche der Außenwand 22 hintergreifen und den Klemmkörper in dem Spalt zwischen den jeweils benachbarten Profilteilen festhalten.

Der Klemmkörper 18 erstreckt sich im wesentlichen über die gesamte Tiefe 29 des Schrankes. Jeder Klemmkörper 18 ist in einem der Spalte 16 eingedrückt und liegt unter Vorspannung fest an den Schnittflächen der jeweiligen Profilteile an. Der Klemmkörper besteht zweckmäßig aus einem federelastischen Kunststoff, der jedoch eine hinreichend große Festigkeit aufweist. Aufgrund der Vorspannung wird bei von außen einwirkenden Kräften sichergestellt, daß der Schrank im wesentlichen seine Form beibehält. Da in den Eckbereichen aufgrund der eingebrachten Schnitte die Steifigkeit des Hohlprofiles erheblich reduziert ist und nur noch entsprechend der Materialstärke der Innenwand der Verbindungssteg zwischen den einzelnen Profilteilen vorhanden ist, wird mittels des Klemmkörpers gleichwohl eine gute Übertragung von Druckkräften sichergestellt und eine unzulässig große Deformierung wird vermieden. Die Vorspannung ist in der Weise vorgegeben, daß bei den zu erwartenden Zugkräften diese Vorspannung nicht vollständig aufgehoben wird, so daß insgesamt eine hohe Formstabilität des Schrankes gegeben ist.

Abgesehen vom Eckbereich 15, in welchem die die Enden der Profilschiene darstellenden beiden Profilteile 4 und 11 miteinander verbunden sind, ist im übrigen die Innenwand 20 des Schrankes in sämtlichen anderen Eckbereichen 14 vollständig geschlossen, ohne daß Schnittkanten oder dergleichen vorhanden wären. In jedem der Eckbereiche 14, erstrecken sich die Stege 32 jeweils über die gesamte Tiefe 29 des Schrankes, und Schnittkanten oder dergleichen fehlen, in welchen sich Schmutz eventuell ansammeln könnte oder durch welche Feuchtigkeit oder Flüssigkeit nach Außen durchtreten könnten. Die abgesehen von dem einzigen Verbindungs-Eckbereich 15 über den Umfang vollständig geschlossene Profilschiene ermöglicht desweiteren eine einfache Reinigung und Säuberung des Innenraumes des Schrankes.

Wesentlich ist, daß die Innenwandung des Schrankes vollständig geschlossen ist, da die Innenwände 20 der Profilteile 4 bis 11 durchgehend sind und in den Eckbereichen 14 je ein Verbindungssteg 32 vorhanden ist. Lediglich in dem Eckbereich 15, in welchem die beiden End-Profilteile 4 und 11 aneinanderstoßen, ist eine Trennfuge vorhanden. Im Unterschied zu herkömmlichen Schränken sind nur die beiden End-Profilteile 4 und 11 mittels des Eckverbinders 34 miteinander verbunden. An der Rückseite des Schrankes ist eine Rückwand 36 angeordnet, welche mittels Schrauben oder geeigneten Befestigungselementen mit den Profilteilen 4 bis 11 verbunden ist. Mittels dieser Rückwand 36 erfolgt zweckmäßig eine Aussteifung des derart ausgebildeten Gehäuses. Da die keilförmigen Klemmkörper 18 im Rahmen dieser Erfindung in die acht Spalte 16 der Eckbereiche 14, 15 eingeklemmt sind, erfolgt eine Aussteifung im Bereich der genannten Spalte, wodurch die Stabilität und Verwindungssteifigkeit des Gehäuses 2 nicht unerheblich verbessert wird.

Fig. 2 zeigt vergrößert einen Schnitt in einem Eckbereich, wobei nunmehr die Rastelemente 28, welche auch als Rastnasen bezeichnet werden können, gut zu erkennen sind. Diese Rastelemente hintergreifen die Innenfläche 30 der Außenwand 22. Ferner steht die Spitze 38 des jeweiligen Klemmkörpers 18 unter Vorspannung auf den Steg 32 auf, wodurch ein fester Sitz des Klemmkörpers 18 sichergesstellt wird. Der Klemmkörper 18 steht mit der äußeren Oberfläche 40, die bevorzugt abgerundet ist, über die Außenwand 22 in einer vorgebbaren Höhe 42 vor. Diese Höhe 42 beträgt in der Praxis etwa 0,5 bis 1 mm. Aufgrund dieses Überstehens der Oberfläche 40 wird in überraschend einfacher Weise sichergestellt, daß evtl. beim Einschneiden des Schnittes für den Eckbereich sich bildende Grate überdeckt werden und auch keine Verletzungsgefahr für einen Benutzer darstellen können. Hierdurch wird ein nicht unerheblicher Fertigungsvorteil erreicht, da eine präzise Nachbehandlung der Schnittflächen der Profilschiene praktisch nicht notwendig ist bzw. mit erheblich größeren zulässigen Toleranzen durchgeführt werden kann. Wie ersichtlich, ist die Rückwand 36 mittels Schrauben 44 an der hinteren Zwischenwand 24 angeschraubt.

Der Klemmkörper 18 liegt mit seinen Keilflächen 26, 27 unter Vorspannung an den jeweils zugeordneten Stirnflächen der Außenwand der beiden Profilteile 5, 6 unter Vorsapnnung an. Entsprechend der Tiefe des Schrankes ergeben sich unter Berücsichtigung der Materialdicke der Außenwand 22 vergleichsweise große Anlageflächen, so daß unzulässig hohe Flächenpressungen vermieden werden. Andererseits wird aufgrund der Vorspannung sichergestellt, daß auch beim Einwirken von Zugkräften die Keilflächen 26, 27 immer dicht an den Stirnflächen der Außenwand anliegen. Hierdurch ergibt sich ferner der Vorteil, daß Schmutz oder Feuchtigkeit nicht in den Hohlraum, der zwischen der Innenwand 20 und der Außenwand 22 vorhanden ist, eindringen können; dies ist im Hinblick auf die Hygiene-Anforderungen, vor allem bei Badezimmerschränken, von Bedeutung. Wie ersichtlich geht im Eckbereich die Innenwand 20 des einen Profilteiles 5 über den Steg 32 kontinuierlich in die Innenwand des anderen Profilteiles 6 über. Es ist also eine vollständig geschlossene Innenwandung auch im Eckbereich vorhanden und Schmutz oder Feuchtigkeit können nicht in den genannten Hohlraum zwischen der Innenwand und der Außenwand eindringen. Dies steht im Gegensatz zu bisher bekanntgewordenen Schränken, bei welchen in den Ecken immer Schnittflächen vorhanden waren, wobei durch kleine Spalte Feuchtigkeit oder Schmutz hindurchtreten konnte. Infolge der geschlossenen Innenfläche werden die Anforderungen an die Hygiene zuverlässig erfüllt und eine Reinigung läßt sich mühelos durchführen.

Fig. 3 zeigt die Protilteile 5 und 6 vor dem Biegen. Von der Außenwand 22 ist in Richtung zur Innenwand 20 ein Schnitt 46 eingebracht worden, der die Profilschiene nicht vollständig durchtrennt, sondern nur bis zur Innenseite 48 der Innenwand 20 reicht. Es ist somit ein Steg 32 stehengeblieben, welcher eine durchgehende Verbindung der Innenwände der einzelnen Profilteile darstellt. Erfindungsgemäß kann die Tiefe des Schnittes 46 auch in der Weise vorgegeben werden, daß eine geringfügige Kerbe oder Einritzung im Bereich 47 der Innenseite 48 erreicht wird, um eine definierte Biegelinie vorzugeben. Die Sirnflächen 50, 52 der Außenwand 22 liegen nach dem Biegen der Profilschiene und dem Einpressen des Klemmkörpers 18 an den oben erwähnten Keilflächen des Klemmkörpers unter Vorspannung fest an. Die Stirnflächen 50, 52 und ebenso die parallelen Seitenflächen 54, 56 des Schnittes 46 weisen einen entsprechend der Schnittbreite gleichbleibenden Abstand 58 zueinander auf. Der Schnitt 46 kann insbesondere mittels eines Sägeplattes in die Profilschiene mit geringem Fertigungsaufwand eingebracht werden. Im Rahmen dieser Erfindung sind sämtliche Schnitte 46 der Profilschiene übereinstimmend ausgebildet, wobei jeweils der gleiche Abstand 58 zwischen den einander gegenüberliegenden Stirnflächen 50, 52 bzw. Seitenflächen 54, 56 eingehalten wird.

Nach dem Einbringen der Schnitte 46 entsprechend den erforderlichen Längen der einzelnen Profilteile wird die durchgehende und nach wie vor aus einem Stück bestehende Profilschiene in der gewünschten Weise gebogen. Erst nach dem Biegen und Verbinden der End-Profilteile 4 und 11 wird die Oberflächenbehandlung durchgeführt. Da die Profilschiene zweckmäßig aus Aluminium oder einer Aluminiumlegierung besteht, erfolgt nach dem Biegen das Eloxieren. Erfindungsgemäß wird das fertig gebogene und auch mittels des Eckverbinders an den Enden zusammengefügte komplette Gehäuse eloxiert oder einem Lackierverfahren unterzogen.

Bezugszeichenliste

2. Gehäuse
4 bis 11 Profilteil
14, 15 Eckbereich
16 Spalt
17 Pfeil
18 Klemmkörper
20 Innenwand
22 Außenwand
24 Zwischenwand
26, 27 Keilfläche
28 Rastelement
29 Tiefe
30 Innenfläche von 22
32 Steg
34 Eckverbinder
36 Rückwand
38 Spitze von 18

40 Oberfläche von 18
42 Höhe
44 Schraube
46 Schnitt
47 Kerbung
48 Innenseite von 20
50, 52 Stirnfläche
54, 56 Seitenfläche
58 Abstand

**Ansprüche**

1. Schrank, insbesondere Badezimmerschrank, mit einem Gehäuse enthaltend wenigstens zwei Profilteile, die in einem Eckbereich unter einem Winkel kleiner 180 Grad miteinander verbunden und bevorzugt als stranggepreßte Hohlprofile aus Aluminium oder einer Aluminiumlegierung ausgebildet sind, dadurch gekennzeichnet, daß die Profilteile (4 bis 11) aus einer einzigen, zunächst geraden Profilschiene bestehen, in welche zur Erzeugung des jeweiligen Eckbereiches (14) von der Außenseite bis zur Innenwand (20) ein Schnitt eingebracht worden ist, daß an der Innenseite des Eckbereiches (14) ein durchgehender, die Profilteile (4 bis 11) verbindender Steg (32) vorhanden ist und daß in dem durch Biegen des Eckbereiches (14) erhaltenen und nach außen sich öffnenden Spalt (16) ein Klemmkörper (18) angeordnet ist.

2. Schrank nach Anspruch 1, dadurch gekennzeichnet, daß der Klemmkörper (18) sich im wesentlichen über die gesamte Tiefe (29) des Schrankes erstreckt, wobei die Keilflächen (26, 27) unter Vorspannung an den Stirnflächen (50, 52) der Außenwand (22) anliegen.

3. Schrank nach Anspruch 1 oder 2, dadurch gekennzeichnet, daß der Klemmkörper (18) keilförmig ausgebildet ist und/oder daß der Klemmkörper (18) mit der Spitze (38) auf der Innenwand (20) aufliegt.

4. Schrank nach einem der Ansprüche 1 bis 3, dadurch gekennzeichnet, daß der Klemmkörper (18) aus einem federelastischen und gleichwohl harten Werkstoff, insbesondere Kunststoff, besteht.

5. Schrank nach einem der Ansprüche 1 bis 4, dadurch gekennzeichnet, daß der Klemmkörper (18) an wenigstens einer der beiden Keilflächen (26, 27) ein Rastelement (28) aufweist, das die Innenfläche (30) der Außernwand (22) hintergreift, und/oder eine abgerundete Oberfläche (40) aufweist.

6. Schrank nach einem der Ansprüche 1 bis 5, dadurch gekennzeichnet, daß die Oberfläche (40) der Leiste (18) in einer Höhe (42) über die Außenwand (22) vorsteht.

7. Schrank nach einem der Ansprüche 1 bis 6, dadurch gekennzeichnet, daß nur die End-Profilteile (4, 11) mitels eines Eckverbinders (34) miteinander verbunden sind.

8. Schrank nach einem der Ansprüche 1 bis 7, dadurch gekennzeichnet, daß zur Vorgabe einer Biegezone der Schnitt (46) mit einer kleinen Einkerbung (47) in die Innenwand (20) eingebracht ist und/oder daß der Schnitt (46) durch Konterschneiden eingebracht ist.

9. Schrank nach einem der Ansprüche 1 bis 8, dadurch gekennzeichnet, daß die Oberflächenbehandlung des Gehäuses (2), insbesondere das Eloxieren oder Lackieren nach dem Biegen der Profilschiene und bevorzugt auch nach dem Verbinden der End-Profilteile (4, 11) durchgeführt worden ist.

10. Schrank nach einem der Ansprüche 1 bis 9, dadurch gekennzeichnet, daß abgesehen von dem Eckbereich (15), in welchem die End-Profilteile (4, 11) miteinander verbunden sind, die Innenwand (20) über den gesamten Umfang, also auch in den Eckbereichen (14), durchgehend geschlossen ausgebildet ist, wobei die Stege (32) Bestandteil der Innenwand (20) sind und sich im wesentlichen über die gesamte Tiefe (29) des Schrankes erstrecken.

FIG.1

FIG.2

FIG.3

# EUROPÄISCHER RECHERCHENBERICHT

Nummer der Anmeldung

EP 88 10 2771

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-1 522 724 (FORMICA INTERNATIONAL LTD) <br> * Figuren 1-5; Seite 1, Zeilen 25-90; Seite 2, Zeilen 1-65 * <br> --- | 1-5,8, 10 | A 47 B 67/00 <br> A 47 B 96/20 |
| X | FR-A-2 359 306 (GROSFILLEX S.A.R.L.) <br> * Figuren 1-3; Seiten 1-4 * <br> ----- | 1-5,10 | |

RECHERCHIERTE SACHGEBIETE (Int. Cl.4)

A 47 B
E 06 B
B 27 F
B 27 H
F 16 B

Der vorliegende Recherchenbericht wurde für alle Patentansprüche erstellt

| Recherchenort | Abschlußdatum der Recherche | Prüfer |
|---|---|---|
| DEN HAAG | 14-06-1988 | NOESEN R.F. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument